Europäisches Patentamt

European Patent Office

Office européen des brevets

(19)

(11) Veröffentlichungsnummer: **0 005 577**
**B1**

# EUROPÄISCHE PATENTSCHRIFT

(12)

(45) Veröffentlichungstag der Patentschrift:
29.09.82

(51) Int. Cl.³: **B 29 D 7/24**

(21) Anmeldenummer: 79200239.6

(22) Anmeldetag: 17.05.79

(54) **Vorrichtung zum gleichzeitigen biaxialen Recken einer Flachfolienbahn aus Kunststoff, insbesondere aus Polypropylen.**

(30) Priorität: 19.05.78 DE 7815102 U
08.06.78 DE 2825209

(43) Veröffentlichungstag der Anmeldung:
28.11.79 Patentblatt 79/24

(45) Bekanntmachung des Hinweises auf die Patenterteilung:
29.09.82 Patentblatt 82/39

(84) Benannte Vertragsstaaten:
BE DE FR GB IT LU NL

(56) Entgegenhaltungen:
DE-A-2 215 135
DE-B-1 274 337
US-A-3 123 854
US-A-3 632 728

(73) Patentinhaber: UNILEVER NV, Burgemeester
s'Jacobplein 1, NL-3000 DK Rotterdam (NL)
(84) Benannte Vertragsstaaten: BE DE FR IT LU NL

(73) Patentinhaber: UNILEVER PLC, Unilever House
Blackfriars P O Box 68, London EC4P 4BQ (GB)
(84) Benannte Vertragsstaaten: GB

(72) Erfinder: Aufsess, Friedrich Freiherr von und zu, Oberer
Schulweg 13, D-8550 Forchheim (DE)
Erfinder: Armsen, Rötger, Kapellenstrasse 10,
D-7812 Bad Krozingen (DE)
Erfinder: Pohl, Hans, Untere Kellerstrasse 22,
D-8550 Forchheim (DE)

(74) Vertreter: Hartong, Richard Leroy et al, Unilever N.V.
Patent Division P.O. Box 137, NL-3130 AC Vlaardingen
(NL)

EP 0 005 577 B1

ACTORUM AG

Vorrichtung zum gleichzeitigen biaxialen Recken einer Flachfolienbahn aus Kunststoff, insbesondere aus Polypropylen

Die Erfindung bezieht sich auf eine Vorrichtung zum gleichzeitigen, biaxialen Recken einer Flachfolienbahn aus Kunststoff, die insbesondere aus Polypropylen besteht oder dieses als einen wesentlichen Bestandteil enthält. In der Vorrichtung laufen Kluppen, die die seitlichen Ränder der flachen Folienbahn erfassen, auf zwei endlosen Führungsbahnen um. Im Bereich der Reckzone sind die beiden Führungsbahnen zueinander divergierend angeordnet, und parallel zu ihnen sind Gewindespindeln vorgesehen, in deren Gewindegänge die Kluppen eingreifen. Die Gewindespindeln treiben die Kluppen in der Reckzone an und erzeugen die Längsreckung der Folienbahn in Maschinenlaufrichtung.

Eine derartige Vorrichtung ist in der DE-C-10 88 703 dargestellt und beschrieben. Sie besitzt Gewindespindeln, deren Gewindegänge über die ganze Länge der Spindeln kontinuierlich wachsende Neigungswinkel aufweisen, wodurch die Reckkluppen gleichmässig beschleunigt werden. Mit einer solchen Vorrichtung wird die Folienbahn gleichzeitig in beiden Achsrichtungen gereckt, wodurch die Folie eine erhebliche Verbesserung der Festigkeitseigenschaften erfährt. In der Praxis hat sich aber gezeigt, dass, insbesondere wenn höhere Festigkeitswerte in Längsrichtung angestrebt werden, diese gleichmässig simultan biaxial arbeitenden Vorrichtungen nicht zu einem befriedigenden Ergebnis führen. Anderseits haben die simultan biaxial arbeitenden Vorrichtungen in der Handhabung gegenüber den in Stufen arbeitenden Reckeinrichtungen zur Herstellung biaxial gereckter Folien sehr viele Vorteile.

Der Erfindung liegt daher die Aufgabe zugrunde, eine derartige Vorrichtung so auszugestalten, dass die auf ihr gereckte Folienbahn in beiden Achsrichtungen annähernd gleiche Festigkeitseigenschaften aufweist und vorzugsweise die Eigenschaften in Längsrichtung sogar besser als die in Querrichtung sind.

Diese Aufgabe wird nach der Erfindung dadurch gelöst, dass die Gewindespindeln zwei Bereiche mit unterschiedlicher Progression der Gewindesteigung besitzen, wobei der erste Bereich 35 bis 75% der gesamten Spindellänge beträgt und in ihm die Progression der Gewindesteigung nicht mehr als 25% des gesamten Längsreckverhältnisses ergibt und wobei der anschliessende zweite Bereich der Gewindespindeln die restliche oder die gesamte Progression der Gewindesteigung, die für das gewünschte gesamte Längsreckverhältnis erforderlich ist, aufweist.

Während sich der Anteil der Querreckung bei den Reckvorrichtungen der vorliegenden Art aus dem Winkel der Divergenz zwischen den Gewindespindeln bzw. den Führungsbahnen der Kluppen in der Reckzone ergibt und über die ganze Länge der Reckzone linear zunimmt, wird eine Längsreckung durch die Beschleunigung der Kluppen mittels progressiver Gewindesteigungen erreicht. Bei gleichbleibender Steigung ist keine Progression vorhanden, und es kann dementsprechend auch keine Längsreckung erfolgen. Bei einer Progression der Gewindesteigung von beispielsweise 1 : 7 in einen bestimmten Bereich der Spindeln werden die Kluppen auf das Siebenfache ihrer Geschwindigkeit am Beginn dieses Bereichs beschleunigt, und es erfolgt in diesem Bereich der Spindeln bzw. der Reckzone eine Längsreckung im Verhältnis 1 : 7.

Beim Recken von Folien erfolgt nicht nur eine Vergrösserung ihrer Fläche und Verkleinerung ihrer Dicke, sondern bei Anwendung geeigneter Recktemperaturen wird auch eine Orientierung der Moleküle und damit eine Verbesserung der Festigkeitseigenschaften erzeugt. Dabei hat die zuletzt vorgenommene Reckung einen grösseren Einfluss auf die Eigenschaften der Folie als die vorher erfolgten Behandlungen. Mit der erfindungsgemässen Vorrichtung ist der Anteil der Längsreckung am Ende der biaxialen Reckung grösser, wodurch auch die Eigenschaften in Längsrichtung stärker verbessert oder wenigstens gleiche Eigenschaften in den beiden Richtungen erhalten werden.

Vorzugsweise ist in dem ersten Bereich die Progression der Gewindesteigung gleich oder kleiner als die Hälfte der Abstandsänderung zwischen den beiden Gewindespindeln, welche die anteilige Querreckung ergibt. In diesem Falle ist in dem ersten Bereich, also am Beginn der simultanen biaxialen Reckung, der Anteil der Querreckung grösser als der Anteil der Längsreckung. Es ist auch möglich, im ersten Bereich keine Progression der Gewindesteigung vorzusehen, so dass hier ausschliesslich eine Querreckung stattfindet. In dem anschliessenden zweiten Bereich der Gewindespindeln bzw. der Reckzone erfolgt eine gleichzeitige Längs- und Querreckung, wobei der Anteil der Längsreckung überwiegt.

Durch das Verschieben der gesamten Längsreckung oder ihres grösseren Anteils in dem zweiten Bereich am Ende der biaxialen Reckzone wird erreicht, dass die Folie in Längsrichtung, d.h. in Maschinenlaufrichtung, mindestens gleiche Festigkeitseigenschaften aufweist wie in Querrichtung und bei geeigneter Wahl der Progression der Gewindesteigung im zweiten Bereich in Längsrichtung sogar bessere Eigenschaften als in Querrichtung erhalten kann.

Die Vorrichtung eignet sich insbesondere für das Recken von Polypropylen, bei dem sehr grosse Reckverhältnisse von etwa 1 : 50 in der Fläche oder mehr sowohl für eine gleichmässige Dicke der Folie als auch zur Erreichung der angestrebten Orientierung und Festigkeit notwendig sind. Die Vorrichtung kann für Folien verwendet werden, die von einem Extruder kommend mit den üblichen Vorbehandlungen auf die Recktemperatur eingestellt in die Simultan-Biaxial-Reckeinrichtung eingeführt werden. Sie ist für Folien, die bereits in einer Vorbehandlung in Längsrichtung auf bis 1 : 5 vorgereckt wurden, besonders vorteilhaft.

Das Prinzip der erfindungsgemässen Vorrichtung und bevorzugte Ausführungsbeispiele werden im Folgenden anhand der Zeichnungen beschrieben.

Es zeigen:

Fig. 1 eine Reckvorrichtung mit zwei Gewindespindeln;

Fig. 2 eine Gewindespindel.

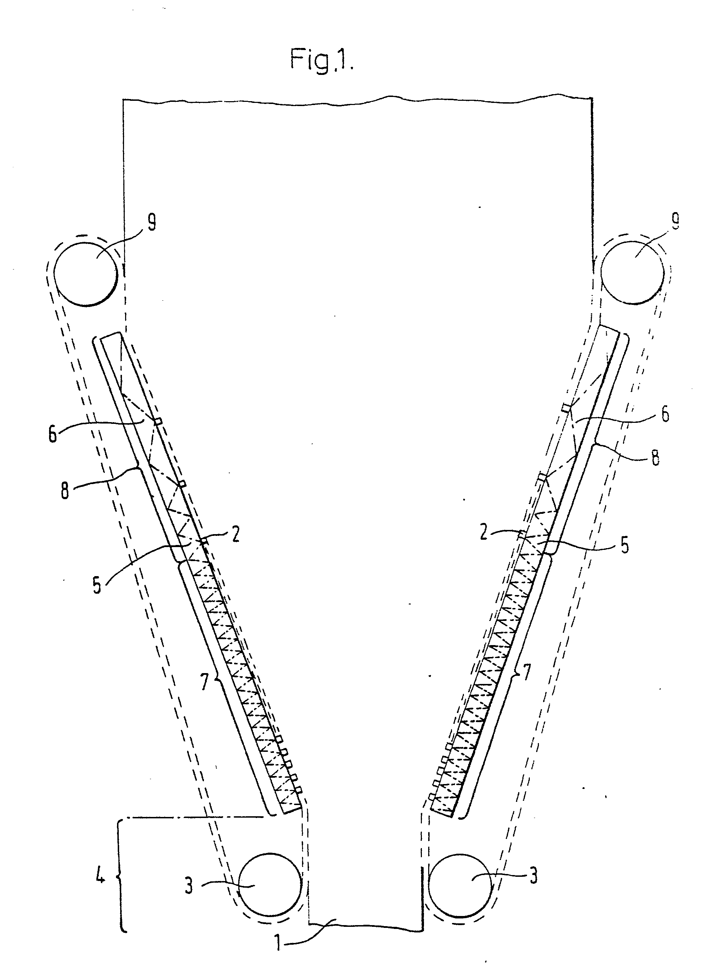

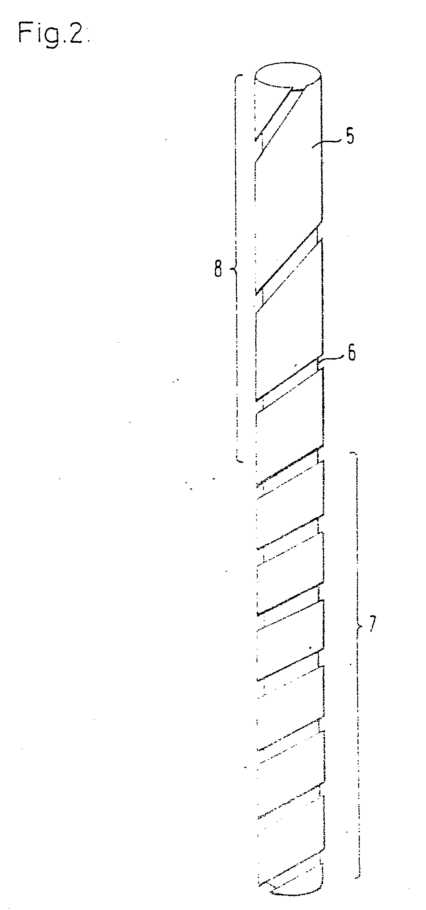

Fig. 1 zeigt eine Folienbahn 1, die in einer Reckvorrichtung an ihren beiden Längsseiten von Kluppen 2 gehalten wird. Die Kluppen 2 beider Seiten sind jeweils auf einer endlos ausgebildeten Führungsbahn angeordnet, welche nicht gezeichnet ist. Am einlaufseitigen Ende der Reckvorrichtung sind zwei Umlenkräder 3 vorgesehen, über welche die Kluppen 2 der Reckzone zugeführt werden. Auf einem kurzen Stück werden die Kluppen 2 hinter diesen Umlenkrädern 3 in einer Einlaufzone 4 parallel zueinander geführt. Hier ist es möglich, Heiz-, Kühl- oder sonstige Einrichtungen, die nicht dargestellt sind, zum Beeinflussen der Folie 1 vorzusehen. Am Ende dieser Einlaufzone 4 sind Gewindespindeln 5 angeordnet, in deren Gewindegänge 6 die Kluppen 2 eingreifen. Die Gewindespindeln laufen parallel zu den Führungsbahnen der Kluppen 2 und sind zueinander in Laufrichtung divergierend angeordnet. Während der Reckung wird die Folie 1 an ihren Seitenrändern durch die Reckkluppen 2 gehalten. Der Antrieb der Kluppen 2 im Reckteil mittels Gewindespindeln 5 ist vorteilhaft, da diese als mechanische Antriebsteile den auftretenden Reckkräften entsprechend gestaltet werden können. Wie insbesondere aus Fig. 2 ersichtlich ist, sind im ersten Bereich 7 der Gewindespindeln 5 die Gewindegänge mit gleichbleibender Steigung ausgebildet. Der erste Bereich 7 umfasst 35 bis 75% der Spindellänge. In einem anschliessenden zweiten Bereich 8 nimmt die Steigung von Windung zu Windung zu, d.h. sie erhält eine Progression, die eine Geschwindigkeitszunahme der Kluppen 2 bewirkt. Es ist auch möglich, bereits im ersten Bereich 7 die Steigung progressiv auszubilden. Die Progression bleibt jedoch hier kleiner als 25% der gesamten Progression. Die gesamte Progression der Spindeln kann 1 : 7 oder auch mehr, bis z.B. 1 : 10, betragen.

Der erste Bereich 7 hat beim dargestellten Ausführungsbeispiel eine Länge von etwa 50% der Gesamtlänge der Spindeln 5. Die Länge des ersten Bereiches 7 und der Grad der evtl. vorhandenen Progression in diesem Bereich kann abhängig vom gewünschten Gesamtlängsreckgrad und der beabsichtigten Verbesserung der Eigenschaften sowie vom zu reckenden Material gewählt werden. Unmittelbar hinter dieser von den Gewindespindeln 5 gebildeten Reckzone kann noch eine nicht dargestellte Fixierstrecke vorgesehen sein, hinter der die Kluppen 2 dann über weitere Umlenkräder 9 und ebenfalls nicht dargestellte Abbremseinrichtungen wieder zur Einlaufzone 4 zurückgeführt werden.

Eine bevorzugte Ausführung der Vorrichtung zeichnet sich dadurch aus, dass die Gewindespindeln 5 in einem ersten Bereich 7, der etwa 40% der gesamten Länge der Spindeln 5 beträgt, keine Progression besitzen und in einem anschliessenden zweiten Bereich 8 die gesamte Progression der Gewindesteigung von etwa 1 : 7 aufweisen.

Eine andere bevorzugte Ausführung ist dadurch gekennzeichnet, dass bei einer eine Querreckung von 1 : 7 ergebenden Divergenz der Gewindespindeln 5 die Progression der Gewindesteigung in einem ersten Bereich 7 von etwa 40% der gesamten Länge der Gewindespindeln 1 : 1,75 beträgt und der anschliessende zweite Bereich 8 eine Progression der Gewindesteigung von 1 : 4,0 aufweist, wobei die gesamte Progression der Gewindesteigung der Gewindespindeln 5 etwa 1 : 7 beträgt.

Eine weitere Vorrichtung, die für die simultane biaxiale Reckung von bereits in Längsrichtung teilweise vorgereckten Folien besonders geeignet ist, enthält Gewindespindeln 5, die in einem ersten Bereich 7 von etwa 75% der gesamten Länge der Gewindespindeln 5 eine Steigung ohne Progression besitzen und in dem anschliessenden zweiten Bereich 8 eine Progression der Gewindesteigung von 1 : 2 aufweisen.

In einer anderen, ebenfalls für bereits in Längsrichtung teilweise vorgereckte Folien bevorzugten Vorrichtung besitzen die Gewindespindeln 5 im ersten Bereich 7 eine Progression der Gewindesteigung von 1 : 1,25 und im anschliessenden zweiten Bereich 8 eine weitere Progression von 1 : 1,6.

In den folgenden Ausführungsbeispielen hat die Folie 1 eine Ausgangsbreite in der Einlaufzone 4 von etwa 500 mm. Es werden Spindeln 5 mit 5 m Länge verwendet, die zur Durchlaufrichtung der Folie in einem Winkel von etwa 17,5°, bezogen auf die Mittelachse, divergieren, woraus sich eine Endbreite von 3 500 mm ergibt, was einer anteiligen Querreckung der Folie von etwa 1 : 7 entspricht. Für die Reckung einer extrudierten Polypropylenfolie werden Spindeln 5 verwendet, die in ihrem ersten Bereich 7 auf einer Länge von 2 m (40% ihrer Länge) eine Steigung von 1 : 1 besitzen, also keine Progression aufweisen, so dass hier nur eine Querreckung erfolgt. Hierdurch wird vor allem die Dicke der Folie über die Breite der Bahn gleichmässig verringert und zugleich eine Orientierung in Querrichtung erzeugt. In dem zweiten Bereich 8 geht die Spindel 5 in eine Steigungsprogression von 1 : 7 über, so dass hier am Ende des Reckvorganges die Längsreckung überwiegt. Obwohl die Folie in dem gesamten Reckvorgang in Längsrichtung und in Querrichtung jeweils auf 1 : 7 gereckt ist, besitzt die Folie infolge des am Ende des Reckvorganges überwiegenden Anteils der Längsreckung eine deutlich grössere Festigkeit in Längsrichtung. Eine andere Spindel 5 in derselben Vorrichtung besitzt in dem ersten Bereich 7 von ebenfalls 2 m Länge eine Steigungsprogression von 1 : 1,75, so dass hier eine überwiegende Querreckung erfolgt. In dem zweiten Bereich 8 beträgt die weitere Steigungsprogression 1 : 4,0, ausgehend von der Steigung am Ende des ersten Bereiches, was in diesem zweiten Bereich eine überwiegende Längsreckung ergibt. Die gesamte Reckung ist wiederum 1 : 7 in beiden Richtungen oder 1 : 49 in der Fläche, d.h. ein Flächenelement in der Einlaufzone 4 mit den Abmessungen Breite $b = 1$ und Länge $l = 1$ wird im ersten Bereich gestreckt auf $b_1 = 3,4$ und $l_1 = 1,75$ und im zweiten Bereich auf $b_2 = 7$ und $l_2 = 7$. Da auch hier im zweiten Bereich die Längsreckung überwiegt und daher eine stärkere Orientierung in Längsrichtung erzeugt wird, ist die Festigkeit der Folie in Längsrichtung etwa grösser als in Querrichtung.

In einem anderen Beispiel wird der Biaxial-Reckeinrichtung eine z.B. auf 1 : 4 in Längsrichtung vorgereckte Folie zugeführt. Diese Vorreckung, die in einem Walzenspalt erfolgen kann, hat den Vorteil, dass während und insbesondere am Ende des biaxialen Reckvorganges die Reckkluppen näher aneinander am Folienrand sitzen können, wodurch die Breite des Abfallstreifens vermindert wird. Die verwendeten Gewindespindeln sind ebenfalls 5 m lang, jedoch beträgt die Länge des ersten Bereiches mit ausschliesslicher Querrekkung etwa 3,5 m (70% der Länge). Es besitzt die Spindel im ersten Bereich eine Steigungsprogression von 1 : 1 (d.h. sie ist nicht progressiv) und im zweiten Bereich von 1 : 2 (d.h. sie ist progressiv). Ein Flächenelement, das in der Vorreckung von $b_0 = 1$ und $l_0 = 1$ auf $b = 1$ und $l = 4$ gereckt wurde, wird im ersten Bereich auf $b_1 = 5,2$ (und $l_1 = 4$) und im zweiten Bereich auf $b_2 = 7$ (und $l_2 = 8$) gereckt. Es wird ein Reckverhältnis von etwa 1 : 56 in der Fläche bezogen auf die ungereckte Ausgangsfolie erreicht und eine in Verhältnis zur Festigkeit in Querrichtung grosse Festigkeit in Längsrichtung erzeugt.

Bei einer anderen Gewindespindel mit einer Steigungsprogression von 1 : 1,25 im ersten Bereich 7 und 1 : 1,6 im zweiten Bereich 8 und im übrigen den vorstehend genannten Verhältnissen wird eine in Längsrichtung auf 1 : 3,5 vorgereckte Folie im ersten Bereich auf 1 : 5,2 breit und 1 : 4,375 längs und im zweiten Bereich auf 1 : 7 in beiden Richtungen gereckt (jeweils bezogen auf die nicht vorgereckte Folie). Auch hier ist wegen der am Ende des Reckvorganges überwiegenden Längsreckung die Festigkeit in Längsrichtung grösser als in Querrichtung.

**Patentansprüche**

1. Vorrichtung zum gleichzeitigen biaxialen Recken einer Flachfolienbahn (1) aus Kunststoff, insbesondere aus Polypropylen, wobei die Vorrichtung in Führungsbahnen geführte Kluppen (2) zum Halten der Ränder der Folienbahn (1) und im Bereich der Reckzone Gewindespindeln (5), die ebenso wie die Führungsbahnen der Kluppen (2) in Bahnlaufrichtung zueinander divergierend angeordnet sind, umfasst, dadurch gekennzeichnet, dass die Gewindespindeln (5) zwei Bereiche mit unterschiedlicher Progression der Gewindesteigung besitzen, wobei der erste Bereich (7) 35 bis 75% der gesamten Spindellänge beträgt und in ihm die Progression der Gewindesteigung nicht mehr als 25% des gesamten Längsreckverhältnisses ergibt und wobei der anschliessende zweite Bereich (8) der Gewindespindeln (5) die restliche oder die gesamte Progression der Gewindesteigung, die für das gewünschte gesamte Längsreckverhältnis erforderlich ist, aufweist.

2. Vorrichtung nach Anspruch 1, dadurch gekennzeichnet, dass in dem ersten Bereich (7) die Progression der Gewindesteigung der Gewindespindeln (5) gleich oder kleiner als die Hälfte der Abstandsänderung zwischen den beiden Gewindespindeln (5) ist.

3. Vorrichtung nach Anspruch 1 oder 2, dadurch gekennzeichnet, dass die Gewindespindeln (5) in einem ersten Bereich (7), der etwa 40% der gesamten Länge der Spindeln beträgt, eine Steigung ohne Progression besitzen und in einem anschliessenden zweiten Bereich (8) die gesamte Progression der Gewindesteigung von etwa 1 : 7 aufweisen.

**Claims**

1. Apparatus for the simultaneous biaxial stretching of a flat film web (1) of plastics material, particularly of polypropylene, which apparatus comprises clamps (2), guided in guideways, for holding the edges of the film web (1) and in the area of the stretching zone is provided with threaded spindles (5), which just as the guideways of the clamps (2) are arranged divergent to each other in the direction of running of the web, characterized in that the threaded spindles (5) possess two zones having different progressions in thread pitch, the first zone (7) covering from 35 to 75% of the overall spindle length and the progression of thread pitch therein resulting in not more than 25% of the overal longitudinal stretch ratio and the subsequent second zone (8) of the threaded spindles (5) having the remaining or the total progression of thread pitch required for the desired overall longitudinal stretch ratio.

2. Apparatus according to claim 1, characterized in that in the first zone (7) the progression of thread pitch of the threaded spindles (5) is equal to or smaller than half the variation in distance between the two threaded spindels (5).

3. Apparatus according to claim 1 or 2, characterized in that the threaded spindles (5) in a first zone (7), forming about 50% of the overall length of the spindles, have a pitch without progression and in a subsequent second zone (8) have the total progression of thread pitch of about 1 : 7.

**Revendications**

1. Appareil pour l'étirage biaxial simultané d'une nappe de pellicule plane (1) en matière plastique, en particulier en polypropylène, comprenant des pinces (2) guidées dans des voies de guidage pour maintenir les rives de la nappe de pellicule (1) et, dans la région de la zone d'étirage, des tiges filetées (5) qui, comme les voies de guidage des pinces (2), sont disposées de manière à diverger dans le sens du défilement de la nappe, caractérisé en ce que les tiges filetées (5) comportent deux zones dans lesquelles les progressions des pas de vis sont différentes, la première zone (7) couvrant 35 à 75% de la longueur totale de la tige pour une progression du pas de vis qui ne donne pas plus de 25% du rapport d'étirage longitudinal global et la deuxième zone suivante (8) des tiges filetées (5) présentant le reste ou l'ensemble de la progression du pas de vis qui est nécessaire pour le rapport d'étirage longitudinal global souhaité.

2. Appareil suivant la revendication 1, caractérisé en ce que dans la première zone (7), la progression du pas de vis des tiges filetées (5) est égale ou inférieure à la moitié de la variation d'écartement des deux tiges filetées (5).

3. Appareil suivant la revendication 1 ou 2, caractérisé en ce que les tiges filetées (5) présentent un pas dépourvu de progression dans une première zone (7) égale à environ 40% de leur longueur totale et l'ensemble de la progression d'environ 1 : 7 dans une deuxième zone (8) qui suit la première.

Fig.1.

Fig.2.